(19) Europäisches Patentamt
European Patent Office
Office européen des brevets

(11) Publication number: **0 244 266 B1**

(12) # EUROPEAN PATENT SPECIFICATION

(45) Date of publication of patent specification: **19.09.90**

(51) Int. Cl.$^5$: **F 23 G 7/00,** F 23 G 7/04, C 02 F 1/70, C 02 F 11/00, D 21 C 11/12, C 01 B 17/26

(21) Application number: **87303938.2**

(22) Date of filing: **01.05.87**

(54) **Reduction burning and compositions therefor.**

(30) Priority: **02.05.86 US 859141**

(43) Date of publication of application: **04.11.87 Bulletin 87/45**

(45) Publication of the grant of the patent: **19.09.90 Bulletin 90/38**

(84) Designated Contracting States: **AT BE DE FR GB IT NL**

(56) References cited:
**WO-A-83/01437**
**DE-A-1 517 164**
**GB-A- 159 202**
**GB-A- 208 832**
**US-A-1 137 779**
**US-A-2 495 248**
**US-A-3 129 058**
**US-A-4 011 129**

**TAPPI JOURNAL, vol. 69, no. 10, October 1986, pages 108-113, Norcross, GA, US; T.M. GRACE et al.: "Role of the sulfate-sulfide cycle in char burning: experimental results and implications"**

(73) Proprietor: **ENGINEERED SYSTEMS INTERNATIONAL, INC.**
**3121 West Spencer Street**
**Appleton Wisconsin 54914 (US)**

(72) Inventor: **Ciriacks, John A.**
**1029 Pembrook Drive**
**Neenah Wisconsin 54956 (US)**
Inventor: **Butcher, Charles H.**
**2710 Marquette Street**
**Monroe Louisiana 71201 (US)**

(74) Representative: **Harvey, David Gareth et al**
**Graham Watt & Co. Riverhead**
**Sevenoaks Kent TN13 2BN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 244 266 B1

## Description

1. This invention relates to processes for the reduction burning of chemical compounds containing certain anionic components, more particularly oxysulfur components and sulfur-nitrogen components. Most especially, this invention pertains to the reduction burning of sulfate ($SO_4^=$), thiosulfate ($S_2O_3^=$), sulfite ($SO_3^=$), and thiocyanate ($SCN^-$).

These chemicals are commonly generated in certain manufacturing processes, such as flue gas scrubbing, the manufacture of TNT, the manufacture of resorcinol, the cleaning of coke oven gas, and the pulping of wood for paper. There have been many attempts, particularly in connection with the pulping processes and the flue gas scrubbing processes, to find ways to chemically reduce these anionic components, in order that the process chemicals may be regenerated and reused. On the whole, certain of these processes have been partially successful, but often leave a substantial portion of the anionic component in the unreduced state. These processes have been of such marginal success that it is common industrial practice in some places to dispose of these chemicals, after certain treatments thereon, either as waste stream effluents to sewage treatment plants, for discharge into waterways, or for landfill. It would be highly desirable to be able to effect substantially complete reduction of these chemicals, with a minimum of polluting effluents, in a standardized process which would be effective for regeneration of starting materials in virtually any of the industries where such reduction is desirable.

The problem is particularly acute with regard to the recovery of chemicals from the scrubbing of hydrogen sulfide from industrial process gases. Of particular interest is the conversion of spent liquors or spent chemicals from scrubbing both hydrogen cyanide and hydrogen sulfide gases, from industrial process gases, to a treated liquor rich in sodium sulfide, with a minimum of sodium sulfate.

A process for recovering sulfur from scrubbing hydrogen sulfide from industrial process gases is well known as the Stretford Process, developed by British Gas Corporation, of London, England. The process is described in various documents throughout the industrial literature. Illustrative of these descriptions is an article appearing in Chemical Engineering Progress magazine, October 1984, pages 40 through 47. Illustrative of another document describing the Stretford Process is the article by Carter, Rogers, and Morris, from the 1977 symposium from McMaster University in Hamilton, Ontario. Other descriptions of the Stretford Process are also believed to be known in the art.

The basic reaction of the Stretford Process includes the conversion of hydrosulfide ($HS^-$) ions in an aqueous alkaline scrubbing solution to elemental sulfur through the use of oxidized vanadium catalyst. The vanadium is reduced in the process from a +5 valence to a +4 valence. The vanadium is regenerated to the +5 valence through the use of an anthraquinone regenerating composition.

In the operation of the Stretford Process, an undesirable side reaction takes place in that a small fraction of the hydrosulfide ions in the scrubbing solution is converted to the thiosulfate form. In the regeneration process, whereby the hydrosulfide is regenerated to sodium carbonate, the thiosulfate remains unaffected, and becomes an unreactive "dead load" in the Stretford Process stream.

The Stretford Process is known to have a maximum capability to carry sodium salt compounds, with a solubility capability of about 23% to 25% sodium salts under typical operating conditions. As the Stretford chemicals are reprocessed and recycled, the amount of non-reactive sodium thiosulfate in the solution gradually increases and the fractional amount (or concentration) of reactive sodium chemicals in the solution decreases. If the thiosulfate is not removed from the solution on a regular, or periodic, basis, the amount of sodium thiosulfate continues to build as the Stretford chemicals continue to be recycled through the reducing and oxidizing phases of removing elemental sulfur and regenerating sodium carbonate. Increasing circulation rates are then required of the Stretford solution in order to quantitatively provide enough reactive chemical in the scrubbing process to do the job. The limit of physical capability is reached when the concentration of reactive chemicals is so low that the circulating pumps cannot circulate the solution fast enough to provide the needed reactive chemicals.

As is indicated in the various literature articles written about the Stretford Process, substantial efforts have been expended toward the regeneration and recovery of Stretford solutions, and particularly with regard to the reduction of the thiosulfate component, so that the amount of unreactive sodium salts present in the solution does not excessively impede the scrubbing process. For example, U.S. Patent 3,959,452 Espenscheid take a portion of the spent Stretford liquor, commonly referred to as a purge stream, and treats it with either sulfuric acid or phosphoric acid followed by treatment with calcium hydroxide. While the result is an effective regeneration of the Stretford scrubbing chemicals, there is also included, as part of the result, the generation of substantial amounts of calcium sulfate or calcium phosphate which require landfill disposal. In the 1977 symposium at McMaster University, there was proposed a gas phase reduction burning process which claims a decomposition of approximately 73% of thiosulfate and 75% of sulfate, the sulfate having been produced as a side reaction to the reduction of thiosulfate. In 1979, Smith and Mills, in a chemical engineering symposium entitled Series Number 57, described a gas phase reduction reaction of Stretford chemicals. They indicate that it is "very difficult to decompose sulfate" and cite decomposition rates in the area of 60% to 70% of the sulfate. An April 1981 article in Chemical Engineering Progress also suggests reduction incineration of Stretford chemicals, with 60% to 70% of the sulfate being reduced to sulfide. Furthermore in European Application 0,074,278, by Dow Chemical

Company in 1982, there is a suggestion that the Stretford chemicals should be recovered by the absorption of the anthraquinone component (ADA) and the vanadium component.

While these various processes indicate a degree of success in recovering spent reaction chemicals, there remains a substantial portion, particularly of the sulfate which remains in the oxidized state after the chemicals have been through the recovery process.

Further processes involving reduction burning are described in WO 83/01437 and US 4,011,129.

WO 83/01437 discloses the conversion of an alkaline metal oxysulfur compound to a corresponding alkali metal sulfide by reaction with a solid carbonaceous material. The reaction takes place during heating of an oxysulfur compound. The reactants are necessarily subjected to centrifugal force and are forced to the periphery of a reaction zone where they form a downwardly flowing melt in which the reduction of these oxysulfur compounds to the sulfide contines. The flowing melt layers about the outer periphery of the reaction zone enable the reactants to be in contact for a longer period of time than if the reactants reacted only directly in the stream of oxidizing gas without forming such a flowing melt layer.

The US patent, No. 4,011,129 discloses a process in which solid pellets of sodium sulfate and sodium carbonate are injected directly into a char bed in a reducing zone of a furnace while maintaining the temperature and reducing atmosphere in the zone thereby to form a smelt containing sodium sulfide and sodium carbonate from the injected pellets.

It is an object of this invention to provide a process for the reduction burning e.g. of spent Stretford chemicals, which will reduce anionic components, more particularly sulfate, thiosulfate, and thiocyanate, to sulfide and carbonate. It is another object to provide a process which is compatible, in general, with reduction burning of various anionic components, including sulfate, thiosulfate, and thiocyanate, and other anionic components.

According to one aspect of the present invention there is provided a process for reducing anions from a waste liquor by injecting a material containing said anions into a furnace containing a char bed; characterised in that said process consists essentially of the steps of: mixing portion of a waste liquor purge stream containing anionic components with a carbonaceous material substantially free from lignin material into a mixture; intimately mingle the anionic material with the carbonaceous material of the stream; injecting the mixture as droplets into the furnace and dropping the injected mixture droplets through the rising hot gases in the furnace; partially reducing the anions in the mixture and drying the mixture as the injected mixture falls through the furnace; incubating the fallen mixture on the char bed to further complete reduction of at least 75% of the anions of the mixture to reusable products while burning the carbonaceous material that forms the char bed with char to supply energy for the process.

In a second aspect of the invention there is provided a process for reducing anions from a waste liquor by injecting a material containing said anions into a furnace containing a char bed; characterised in that said process consists essentially of the steps of: mixing a portion of a waste liquor purge stream containing anionic components with a carbonaceous material substantially free from lignin material into a mixture; intimately mingling the anionic material with the carbonaceous material of the stream; injecting the mixture as droplets into the furnace and dropping the injected mixture droplets through the rising hot gases in the furnace; partially reducing the anions in the mixture and drying the mixture as the injected mixture falls through the furnace; incubating the fallen mixture on the char bed to further complete reduction of at least 75% of the anions of the mixture to reusable products while burning the carbonaceous material that forms the char bed with char to supply energy for the process.

In a second aspect of the invention there is provided a process for reducing anions from a waste liquor by injecting a material containing said anions into a furnace containing a char bed; characterised in that said process consists essentially of the steps of; intimately mingling a concentrated portion of a purge stream containing sodium thiosulfate with carbonaceous material free from lignin material to form a mixture; injecting the mixture as droplets into the furnace and thermally decomposing the sodium thiosulfate to a reaction product after water is evaporated from the mixture as the droplets fall through the furnace; incubating the mixture on the char bed to further complete reduction of at least 75% of the reaction products to reusable products; and melting the reusable product to a smelt and recovering the smelt from the char bed, the charred carbonaceous material that forms the char bed being oxidised to supply energy for the process. The anion is typically an oxysulfur anion such as sulfate, thiosulfate, or sulfite. Another typical anionic component is a sulfur nitrogen compound such as thiocyanate.

It is particularly important that the carbonaceous material or fuel be capable of forming a particulate-type char in a reduction furnace. In some embodiments the fuel is totally free of organic carbon.

The fuel is preferably particulate in nature, and especially is capable of forming particles of substantially pure carbon in the reduction furnace. Typical of fuels which are particulate, and of substantially pure carbon, is coke. Exemplary of fuels which are capable of forming particles of essentially pure carbon is coal. There are, as is well known, certain volatile components in coal which are evolved under the influences of heat, leaving a useful residue of substantially pure carbon.

Part of the function of the fuel is to burn and generate heat to energise the reduction furnace. It is important, however, that there be provided to the furnace more carbonaceous fuel than is needed to fuel the furnace. The additional fuel, which is in the form of particulate carbon at some point in the reduction operation, is used as the means of reducing the anions in the chemical reduction operation. Typically the reducing carbon from the fuel combines with oxgen, or its equivalent, from the anion in order to effect the

reduction of the anion. It is desirable to provide to the reduction furnace at least about 1.5 moles of carbon for each valence unit of desired anion reduction.

It is particularly contemplated that the purge stream material serving as the starting material of the process of this invention may include vanadium compounds, and in some cases, quinone compounds, particularly anthraquinone compounds and naphthoquinone compounds, most especially anthraquinone disulfonic acid.

The invention relates to a process of reducing the anionic components of purge stream materials in a reduction furnace which uses a char bed which serves as a primary location where the chemical reduction reaction takes place. It is necessary that the dispersion mixture have adequate fluidity as it is introduced into the furnace so that it can be sprayed as droplets. The spray is directed toward the char bed. Portions of the spray are volatilized in the process of falling toward the char bed. As the spray is travelling from the point of its introduction into the furnace toward the char bed it forms a char. Portions of the mixture may react in the gas phase during the fall toward the char bed. The unreacted portions, which are the majority of the mixture, react on the char bed.

It is important that the fuel be intimately mixed with the anion-containing compound by the time it arrives on the char bed. The mixing takes place before the mixture is injected into the furnace, and thus the fuel and chemical compounds are introduced as a single mixture.

As a result of the mixing of the fuel with the reactive anionic components, and the transpiration of the reaction on the char bed, at least 75%, and preferably at least 90% of the oxysulfur compounds are reduced to the sulfide form. Further at least 75% and preferably at least 90% of the sulfate is reduced to the sulfide form.

A more complete recovery of chemicals may be made by separating, from the chemical compound containing the anion, the quinone components, such as anthraquinone disulfonic acid, before the compounds are introduced into the reduction furnace. The ADA can be separated from the compound by contacting the chemical compound with activated carbon. The ADA may then be recovered from the activated carbon and recycled for further use. The balance of the purge stream, then, is subjected to the reduction furnace process as indicated above.

The invention will now be described in further detail by way of example only with reference to the preferred embodiments and with reference to the sole accompanying drawing which is a schematic illustration of a reduction burning portion of a system for regenerating a spent Stretford liquor stream by means of reduction burning in a reduction furnace, followed by further treatment, of the smelt.

In the detailed description that follows, the invention is discussed in terms of its application for use in regenerating spent oxysulfur chemicals in a purge stream taken from a Stretford liquor. It will be seen hereinafter that the same process can be used to regenerate spent chemicals from a variety of chemical reaction processes.

The invention herein pertains specifically to the recovery of chemicals for reuse as in a process for scrubbing industrial process gases. The starting material in the preferred embodiment is waste liquor from the Stretford process. The liquor is passed through a bed of activated carbon 110 for removal, and recovery, of quinone derivatives, and an evaporator 112 for evaporation of water, and thus to raise the solids concentration of the waste liquor. The concentrated liquor is then mixed with a carbonaceous fuel 114 in a mixer 116 to obtain a dispersion of the fuel in the concentrated waste liquor. The mixture is introduced into the furnace 118 as by a spray nozzle 120 which sprays the mixture towards the bottom of the furnace. The spray mixture travels downwardly toward the bottom of the furnace and lands on char bed 122. A portion of the carbonaceous fuel is used to produce the furnace heat. An excess of carbon is available, by virtue of the amount of fuel used, to serve as a reducing agent effecting the reduction reaction. Some of the mixture is reduced in the gas phase while the spray is traveling between the nozzle and the char bed. A significant portion of the reducible material is reduced on the char bed. The products of the reaction form a liquid smelt which flows off the char bed, collects in a pool 124 at the base of the furnace, and flows into smelt receiving tank 126. The exhaust gases from the furnace are exhausted and passed through various exhaust gas scrubbers before going to the exhaust stacks.

This invention is applicable for a variety of reduction reactions. Its best mode is believed to be in the regeneration of chemicals, particularly as it applies to reduction of sulfate to sulfide, in the Stretford process for recovering sulfur from scrubbing hydrogen sulfide from industrial process gases.

In the Stretford process, hydrogen sulfide ($H_2S$) is absorbed by sodium carbonate in the Stretford solution according to reaction (1),

$$H_2S + Na_2CO_3 \rightarrow NaHS + NaHCO_3 \qquad (1)$$

Any sodium sulfide ($Na_2S$) present is also reactive with $H_2S$, as in reaction (2),

$$H_2S + Na_2S \rightarrow 2NaHS \qquad (2)$$

Sodium metavanadate ($NaVO_3$) in the Stretford solution oxidizes the NaHS to form a dispersion of small sulfur particles, as in reaction (3),

$$2NaHS + 4NaVO_3 + H_2O \rightarrow 2S + Na_2V_4O_9 + 4NaOH \quad (3)$$

and to regenerate sodium carbonate as in reaction (4),

$$NaOH + NaHCO_3 \rightarrow Na_2CO_3 + H_2O \quad (4)$$

The sulfur particles may be removed from the Stretford solution by a filtration. $Na_2V_4O_9$ is regenerated back to $NaVO_3$ by an oxidation-reduction reaction with anthraquinone disulfonic acid (ADA). The ADA is regenerated by reacting with oxygen in the air.

A small fraction of the sulfur initially absorbed as NaHS in reactions (1) and (2) reacts with oxygen to form sodium thiosulfate as in reaction (5).

$$2NaHS + 2O_2 \rightarrow Na_2S_2O_3 + H_2O \quad (5)$$

The presence of the thiosulfate in the Stretford solution is the fundamental problem which has been addressed, either directly or indirectly, by many in the art. Thiosulfate does not interfere with the chemical reactions that scrub $H_2S$ from industrial process gases. However, as the sodium thiosulfate concentration increases in the $H_2S$ scrubbing solution, a solubility limit for dissolved sodium salts is reached at about 300 grams of solids per liter of solution. The result is an increasing dead load of unreactive sodium thiosulfate in the solution, with corresponding decreasing capability to solvate reactive sodium scrubbing chemicals which react with $H_2S$, in the primary scrubbing process. Eventually, the Stretford solution becomes saturated to the point where it is no longer capable of economically performing the scrubbing process. Such a saturated solution may be either discarded to sewage treatment or may be regenerated by treatment for reduction of its unreactive sodium salt content. Typical regeneration treatment includes the continuing drawing off of a portion of the circulating Stretford solution as a purge stream and chemically treating the chemical composition in the purge stream to thereby reduce the thiosulfates and sulfates to sulfides, and thus to generate a chemical stream which is again useful for scrubbing industrial process gases. Typically, the purge stream, with its reduced chemicals, is rejoined with the circulating Stretford chemical stream, thereby providing a continuous purging and regeneration of the Stretford chemical stream. Typical purge streams have the following solids compositions, by weight:

| | Without purge regeneration | Conventional purge regeneration |
|---|---|---|
| $Na_2CO_3 + NaHCO_3$ | 2.7% | 16.0% |
| $NaVO_3$ | 1.7% | 1.4% |
| ADA | 0.6% | 0.6% |
| $Na_2S_2O_3$ | 87.2% | 26.0% |
| $Na_2SO_4$ | 7.8% | 56.0% |
| | 100% | 100% |

While the composition of the purge stream may vary from time to time, and from process to process, it is common in the conventional art to have relatively large fractions of the purge stream solids as sodium sulfate and sodium thiosulfate, which are both unreactive sodium salts within the context of the Stretford scrubbing process. It is important that the fraction of these two components be controlled within the Stretford process in order for the process to proceed without poisoning the Stretford solution to the extent that further absorption of hydrogen sulfide is unacceptably impeded.

In a typical process, a portion of the Stretford solution is withdrawn from the process as a purge stream and is treated for reduction of the thiosulfate content and the sulfate content to the sulfide form, and is then returned to the Stretford solution as a useful scrubbing chemical. In the first step of the general process of the invention the waste liquor is purged from the Stretford Process. The purge stream, as withdrawn from the process, typically has a solids content of approximately 25%. The purge stream may optionally be passed through activated carbon to recover the ADA. In any event, the purge stream is concentrated by evaporating water, typically in direct contact evaporators, to raise the solids content into the region of 40% to 50% solids. The higher solids content is preferred; the limitation being that solids content which will still

allow for sufficient fluidity in the dispersion to satisfy the needs of the balance of the process. The concentrated purge stream liquor is then mixed with a carbonaceous fuel such as coal or coke. In order to efficiently support the reaction it is important that the reducing carbon reactant be finely divided and appropriately mixed with the concentrated Stretford liquor. Thus the mixing should desirably, but not necessarily, produce a uniform mix. The mixture of concentrated liquor and the fuel is sprayed into the reduction furnace. The spray is preferably in the form of coarse droplets, such that the droplets are of sufficient size that they are urged by gravity to drop to the bottom of the furnace through the upward flow of gas currents. As the droplets of the mixture travel downwardly, the heat of the furnace vaporizes the water in the mixture, and by the time the droplets reach the char bed at the bottom of the furnace, no substantial amount of water remains in the mixture. Rather, the mixture, including the thiosulfate and sulfate components, is more in the form of a char. Any volatile matter from the fuel will have been driven off by the time the mixture reaches the char bed. Some of the carbon may have burned in the gaseous phase before reaching the char bed. Additional carbon burns on the char bed, generating the furnace heat.

Sodium thiosulfate is not stable at high temperatures such as are found in the furnace. When water is present, thiosulfate starts decomposing as shown in reaction (6). In the presence of sodium carbonate, when water is not reactively present, the decomposition may proceed as shown in reaction (7). In the absence of sodium carbonate, or water, thermal decomposition proceeds as shown in reaction (8).

$$Na_2S_2O_3 + H_2O \rightarrow Na_2SO_4 + H_2S \qquad (6)$$

$$Na_2S_2O_3 + Na_2CO_3 \rightarrow Na_2SO_4 + Na_2S + CO_2 \qquad (7)$$

$$4Na_2S_2O_3 \rightarrow 3Na_2SO_4 + Na_2S + 4S \qquad (8)$$

It is seen from reactions (6), (7) and (8) that, along with the desirable reduced compounds of $H_2S$, $Na_2S$ and S, the thiosulfate decomposition reaction produces the undesirable compound sodium sulfate ($Na_2SO_4$).

According to reaction (7), about 50 mole percent of the sulfur is converted to the undesirable sulfate form, while 50 mole percent is converted to the useful $Na_2S$. To the extent reaction (8) proceeds, about 38 mole percent of the sulfur is converted to the undesirable sulfate form and about 62 mole percent is recovered in the useful forms of $Na_2S$ and elemental sulfur. The existence of sulfate in the spent Stretford liquor actually occurs as a product of the reduction process of regenerating the spent liquor from thiosulfate to sulfide, as seen in reactions (6), (7) and (8). The amount of sulfate generated in the gas scrubbing process is typically rather small.

As shown in the literature, it has previously been difficult to convert $Na_2SO_4$ to $Na_2S$. In the instant invention, this conversion can be done with efficiencies greater than 90%. In order for this conversion to proceed with this high efficiency it is critical that the reduction furnace have a char bed on which the reactants react. A primary fraction of the reduction reaction taking place in the reduction furnace takes place on the char bed. There, the carbon char particles are in intimate contact with the $Na_2SO_4$ molecules at a temperature of about 900°C to 950°C, and the reduction reaction, whereby sulfate is reduced to sulfide, proceeds according to reaction (9)

$$3Na_2SO_4 + 8C \rightarrow 3Na_2S + 4CO + 4CO_2 \qquad (9)$$

The $Na_2S$ (melting point 1180°C) forms a smelt with sodium carbonate (melting point 851°C). The smelt flows from the bottom of the smelter and is further treated according to processes which form no part of this invention.

The treated liquor from the process of the invention may be used in both $H_2S$ scrubbers and HCN scrubbers. The chemical requirements for these two scrubbing liquors are similar.

For HCN absorption, $Na_2CO_3$ is desired (reaction 11). However, some $Na_2S$ is needed as shown in reactions (10) and (11).

$$Na_2S + nS \rightarrow Na_2S(n + 1) \qquad (10)$$

$$Na_2S(n + 1) + Na_2CO_3 + HCN \rightarrow NaSCN + NaHCO_3 + Na_2S_n \qquad (11)$$

For $H_2S$ absorption, $Na_2CO_3$ is desirable as indicated by reaction (1). $Na_2S$ also reacts with $H_2S$ as indicated by reaction (2).

In some cases the spent liquor includes the chemical products from scrubbing hydrogen cyanide (HCN), such as from a coke oven gas. Product formed from scrubbing hydrogen cyanide is usually in the

form of sodium thiosulfate (NaSCN). The NaSCN is decomposed in the recovery furnace according to a series of reactions (12), (13), and (14).

$$NaSCN + CO_2 + H_2O \rightarrow HCN + NaHCO_3 + S \qquad (12)$$

$$2NaSCN + 4H_2O \rightarrow N_2 + 2H_2S + 2H_2 + CO + Na_2CO_3 \qquad (13)$$

$$NaSCN + 3H_2O \rightarrow COS + CO_2 + 3H_2 + N_2 + Na_2S \qquad (14)$$

Reactions (12), (13) and (14) represent several routes by which decomposition of sodium thiocyanate may occur. As the droplets of the mixture travel from the spray nozzle near the top furnace toward the char bed, reaction (12) may occur to some extent. As the unreacted NaSCN is heated further (NaSCN melts at 287°C), decomposition continues. One reaction which may occur is set forth as reaction (13). Analytical tests indicate that the reaction taking place at 850°C to 950°C is primarily reaction (14). In addition to the carbonyl sulfide (COS) and $Na_2S$, there may also be formation of some $Na_2CO_3$ (reaction 13). In addition some HCN gas may be produced in small amounts via reaction (12) or a similar reaction. This HCN in the reduction furnace exhaust gas along with the $H_2S$ and any $SO_2$ is removed in the exhaust gas scrubber before releasing the exhaust gas to the atmosphere. The COS from reaction (14) is oxidized by the secondary air in the reduction furnace according to reaction (15)

$$2COS + 3O_2 \rightarrow 2CO_2 + 2SO_2 \qquad (15)$$

The carbonaceous fuel is preferably coal or coke having a nominal size of −200 mesh, this size being desirable in order to facilitate the mixing, and the subsequent capability to be sprayed through a nozzle and form droplets where the mixture is more or less uniform within a given droplet. In the preferred embodiment the fuel feed stream is fed into a wetting device where it is wet with previously mixed slurry and then is carried by the slurry into a strongly agitated slurry storage tank. The mixed slurry is pumped through the nozzles and past the nozzles of the furnace, with an excess of material being circulated back to the tank with flow rate high enough to prevent solid-liquid separation.

Reduction Burning Furnace

During normal operation, the mixture stream is introduced near the top of the furnace through pressure atomizing nozzles pointed toward the bottom of the furnace. As the droplets fall through the rising hot gases, the water in the mixture evaporates. When coal is used, volatile matter in the fuel is also evolved as the droplets are falling from the top of the furnace to the bottom of the furnace. As a result the fuel will have undergone some charring by the time it has reached the char bed.

Essentially dry particles arrive on the char bed, which is at a temperature of about 950°C. It is on the char bed that the most significant amounts of reduction to sulfide take place. The reduced salts are melted and seep out of the bed. Heat for the reduction reaction, and the drying of the falling spray, comes from oxidation of some of the carbon in the smelter. The carbon being used in the generation of heat and in the reduction of the oxidized salts is replaced by the carbon arriving in the spray particles. There is essentially a constant material balance, then, between the carbon which is being provided with the spray particles and the carbon which is being used, primarily on the char bed, in the production of heat and as a reducing agent to produce the reduced chemicals.

The oxidation of carbon to generate heat for the furnace is provided using a controlled blast of primary air near the char bed, and provided through a series of air ports. The ports may be adjusted to maintain an even bed temperature. Cool areas of the bed are indicated by darkness showing on an infrared bed imaging system. Secondary air may be supplied through additional ports about the glowing bed if the combustion of part of the reduced gases generated by the glowing bed is necessary.

The overall result of the process of the invention is four fold:

(1) The desirable chemicals sodium sulfide ($Na_2S$), sodium carbonate ($Na_2CO_3$), and sodium bicarbonate ($NaHCO_3$) are regenerated and available for recycling and usage in Stretford scrubbing liquor.

(2) Saleable elemental sulfur is produced.

(3) The exhaust gases from this unit pass to existing scrubbing and reaction facilities for recovery of sulfur compounds, so that the final effluent gas is mainly nitrogen and carbon dioxide with some water.

(4) Waste from the overall Stretford flue gas scrubbing process is essentially limited to insoluble solid components of coal or coke ash, and the liquid water used to wash or remove them from a filter cake which is collected in the treatment of the recycled smelter product, subsequent to the smelt production.

Using the process as disclosed, with a char bed as a primary reaction site in the furnace, over 75%, usually over 80%, and especially over 90%, of the sulfate may be reduced in the reduction furnace. For example, by operating the Stretford Sysem with a constant 1% purge stream being fed to the reduction operation of the invention, the sulfate content, expressed as weight percent of solids, may be maintained at a level of approximately 5% or less of the Stretford liquor, compared with 40% to 60% sulfate in the conventional art. The purge stream flow rate using conventional art is more than twice that with this invention.

The real value of this invention is in its ability to reduce sodium sulfate with a high degree of efficiency, in that it is able to convert over 75%, and up to over 90%, of the sulfate to the reduced state, whether the sulfate is in the stream fed into the reduction furnace, or is produced in the reduction process.

Table 1 shows typical compositions, in grams per liter of spent liquor, of a recovery process of the invention and a gas phase reduction burning process of the conventional art for reducing a Stretford purge stream.

TABLE 1

| Chemical | Spent Liquor | | Treated Liquor | |
|---|---|---|---|---|
| | Conventional | This Invention | Conventional | This Invention |
| $Na_2S_2O_3$ | 60 | 156 | 0 | 0 |
| $Na_2SO_4$ | 110 | 14 | 110+ | 14 |
| $Na_2CO_3$ | 100 | 100 | 140 | 205 |

Table 1 illustrates the dramatic reduction in steady state sulfate content of a Stretford liquor stream when using the process of the invention, thus relieving the Stretford liquor of its load of unreactive sodium sulfurous salts. And while the regeneration process can provide for indefinite regeneration of Stretford liquor, operating practice has shown that, when using conventional regeneration, the Stretford liquors must be periodically replaced, as the efficiency of the regeneration decreases with the continued use of a particular charge of Stretford liquor, including make-up solutions, because of accumulating sodium sulfate which is not regenerated by the conventional regeneration process.

The Stretford purge stream is one of several processes which generate undesirable sulfate compounds. It is realistic to anticipate that these other waste streams might be benefited by using using the invention disclosed herein for treatment of the waste streams. In one known process, the spent liquor from scrubbing hydrogen cyanide is combined with the spent Stretford liquor, from scrubbing hydrogen sulfide, for reduction of the spent liquors together in the reduction burning process. The combined spent liquor, using the process of the invention, has a typical mass balance as shown in Table 2. Comparative mass balance is also shown for treating the combined liquor with a conventional reduction process.

TABLE 2

| Chemical | Spent Liquor | | Treated Liquor | |
|---|---|---|---|---|
| | Conventional | This Invention | Conventional | This Invention |
| NaSCN | 130 | 130 | 0 | 0 |
| $Na_2S_2O_3$ | 42 | 110 | 0 | 0 |
| $Na_2SO_4$ | 78 | 10 | 78 | 10 |
| $Na_2CO_3$ | 20 | 20 | 133 | 179 |

Referring now to Tables 1 and 2, the amount of sulfate in liquor subject to conventional treatment is substantially higher than the amount of sulfate in liquor subject to treatment according to the invention. It is seen from the tables that this difference in sulfate content exists in both the spent liquor and the treated liquor; thus emphasizing that it is the conventional regeneration process exemplified by reactions (6), (7) and (8) that generates the sulfate, not the scrubbing and Stretford processes exemplified by reactions (1), (2), (3), and (4). Accordingly, whereas conventional reduction regeneration does not cause nearly complete decomposition of sulfate, and sulfate is present in the products produced by the reduction reactor, sulfate becomes a part of the Stretford liquor when the treated liquor is returned to the Stretford liquor stream. Thus is there a significant fraction of sulfate in the Stretford chemicals in both the purge stream and after the reduction process, as the Stretford chemicals are continuously used in the scrubbing of industrial process gases, and regenerated by a conventional reduction burning process.

The process of the invention is capable of causing a large fraction of sodium sulfate to decompose in the reduction furnace, as in reaction (9). Therefore, there is not a large constituent of sulfate in the smelt

produced according to the invention, and thus no significant accumulation of sulfate from the reduction regeneration process. Significantly, sulfate which may be present in the liquor fed into the reduction furnace is decomposed, as according to reaction (9), whereby the process of the instant invention provides a means for reducing sulfate, as in a waste stream, to sulfide.

This process, for example, may be of value in the pulping industry as a means of treating black liquor. Black liquor is treated in a reduction burning process for the conversion of sodium sulfate to sodium sulfide, and the burning of the black liquor organic matter in order to generate process heat. While the char bed approach is known in the paper industry, there may be substantial benefit to be gained by the mixing, with black liquor, of a carbonaceous particulate fuel, such as coal or coke, to increase the overall efficiency of the process.

Another industry that generates sulfates and sulfites, which sulfates and sulfites may be reduced by the process of the invention, is the resorcinol industry.

Yet another industry which generate quantities of materials reducible by the process of the invention is the manufacture of TNT explosives. The waste stream from that process includes sodium sulfate ($Na_2SO_4$), sodium sulfite ($Na_2SO_3$), sodium nitrate ($NaNO_3$), and sodium nitrite ($NaNO_2$). As in the process disclosed for the treatment of Stretford liquor, it is anticipated that these other processes, and other processes producing similar waste products, may be treated using the process of the invention (some to generate useful and saleable products), effectively reducing the amount and toxicity of waste streams.

As referred to herein, a "valence unit" is defined as a unitary electrical charge on an ionic component of a compound. The valence of various anions is well known in the literature. A valence unit of reduction is the reduction of the valence number of an element such as sulfur by 1 numerical unit. For example, in sodium sulfate the sulfur atom exhibits a valence of +6. In sodium sulfide, sulfur exhibits a valence of −2. In transformation from the sulfate form to the sulfide form the valence has changed, then, from a +6 to −2, for a total change of 8 valence units.

"Percent by weight of solids", as used herein means the percent by weight of non-aqueous material. For example, in a pulping liquor, the "solids" would include the spent reaction chemicals, the organic lignin compounds, and the various short chain sugars which have been extracted from the wood in the pulping process. It will be appreciated that the term "solids" as used here does include some liquidus materials which normally are not considered as solids; but for the invention disclosed herein they are to be considered solids for the purpose of defining the percent by weight of solids.

**Claims**

1. A process for reducing anions from a waste liquor by injecting a material contaning said anions into a furnace containing a char bed; characterised in that said process consists essentially of the steps of: mixing a portion of a waste liquor purge stream containing anionic components with a carbonaceous material substantially free from lignin material into a mixture; intimately mingling the anionic material with the carbonaceous material of the stream; injecting the mixture as droplets into the furnace and dropping the injected mixture droplets through the rising hot gases in the furnace; partialy reducing the anions in the mixture and drying the mixture as the injected mixture falls through the furnace; incubating the fallen mixture on the char bed to further complete reduction of at least 75% of the anions of the mixture to reusable products while burning the carbonaceous material that forms the char bed with char to supply energy for the process.

2. A process for reducing anions from a waste liquor by injecting a material containing said anions into a furnace containing a char bed; characterised in that said process consists essentially of the steps of: intimately mingling a concentrated portion of a purge stream containing sodium thiosulfate with carbonaceous material free from lignin material to form a mixture; injecting the mixture as droplets into the furnace and thermally decomposing the sodium thiosulfate to a reaction product after water is evaporated from the mixture as the droplets fall through the furnace; incubating the mixture on the char bed to further complete reduction of at least 75% of the reaction products to reusable products; and melting the reusable product to a smelt and recovering the smelt from the char bed, the charred carbonaceous material that forms the char bed being oxidized to supply energy for the process.

**Patentansprüche**

1. Verfahren zur Reduzierung von Anionen in einer Ablauge durch Einführen eines die Anionen enthaltenden Materials in einen ein Bett aus künstlicher Kohle enthaltenden Ofen, dadurch gekennzeichnet, daß das Verfahren im wesentlichen die Schritte umfaßt, daß ein Teil eines anionische Bestandteile enthaltenden Ablaugenspülstroms mit einem im wesentlichen von Ligninmaterial freien kohlenstoffhaltigen Material zu einem Gemisch vermischt wird, das anionische Material mit dem kohlenstoffhaltigen Material des Stroms innig zusammengemischt wird, das Gemisch als Tropfen in den Ofen eingeführt und die eingeführten Gemischtropfen durch die aufsteigenden heißen Gase im Ofen fallengelassen werden, die Anionen in dem Gemisch teilweise reduziert werden und das Gemisch beim Herabfallen des eingeführten Gemisches durch den Ofen getrocknet wird und das herabgefallene Gemisch auf dem Kohlebett zur Inkubation gebracht wird, um die Reduktion von zumidest 75% der Anionen des

Gemisches zu wiederverwendbaren Produkten weiter zu vervollständigen, während das kohlenstoffhaltige Material, das das Kohlebildet mit künstlicher Kohle bildet, zur Zuführung von Energie für das Verfahren verbrannt wird.

2. Verfahren zur Reduzierung von Anionen in einer Ablauge durch Einführen eines die Anionen enthaltenden Materials in einen ein Bett aus künstlicher Kohle enthaltenden Ofen, dadurch gekennzeichnet, daß das Verfahren im wesentlichen die Schritte umfaßt, daß ein konzentrierter Teil eines Natriumthiosulfat enthaltenden Spülstroms mit einem von Ligninmaterial freien kohlenstoffhaltigen Material zur Bildung eines Gemisches vermischt wird, das Gemisch als Tropfen in den Ofen eingeführt und das Natriumthiosulfat nach einem Verdampen von Wasser aus dem Gemisch beim Herabfallen der Tropfen durch den Ofen thermisch zu einem Reaktionsprodukt abgebaut wird, das Gemisch auf dem Kohlebett zur Inkubation gebracht wird, um die Reduktion von zumindest 75% per Reaktionsprodukte zu wiederverwendbaren Produkten weiter zu vervollständigen, und das wiederverwendbare Produkt zu einer Schmelze verschmolzen und die Schmelze von dem Kohlebett zurückgewonnen wird, wobei das verkohlte kohlenstoffhaltige Material, das das Kohlebett bildet, zur Zuführung von Energie für das Verfahren oxidiert wird.

**Revendications**

1. Procédé de réduction des anions d'une lessive résiduaire par injection d'une matière contenant lesdits anions dans un four qui contient un lit de charbon, caractérisé en ce qu'il comprend essentiellement les étapes consistant à mélanger une partie d'un courant d'évacuation de lessive résiduaire contenant des composants anioniques avec une matière carbonée pratiquement exempte de dérivés de lignine pour former un mélange; à mélanger intimement la matière anionique avec la matière carbonée du courant; à injecter le mélange sous forme de gouttelettes dans le four et à faire tomber les gouttelettes du mélange injecté à travers les gaz chauds ascendants dans le four; à réduire partiellement les anions contenus dans le mélange et à sècher le mélange tandis que le mélange injecté tombe à travers le four; à mettre en incubation sur le lit de charbon le mélange qui est tombé pour compléter la réduction d'au moins 75% des anions du mélange en produits réutilisables, tandis que la matière carbonée qui constitue le it de charbon est brûlée avec du charbon pour fournir de l'énergie pour l'opération.

2. Procédé de réduction des anions d'une lessive résiduaire par injection d'une matière contenant lesdits anions dans un four qui contient un lit de charbon, caractérisé en ce qu'il comprend essentiellement les étapes consistant à mélanger intimement une partie concentrée d'un courant d'évacuation contenant du thiosulfate de sodium avec une matière carbonée exempte de dérivés de lignine pour former un mélange; à injecter le mélange sous forme de gouttelettes dans un four et à décomposer thermiquement le thiosulfate de sodium en un produit de réaction, aprés que l'eau a été chassée par évaporation du mélange tandis que les gouttelettes tombent à travers le four; à mettre en incubation le mélange sur le lit de charbon pour compléter la réduction d'au moins 75% des produits de réaction en produits réutilisables; à fondre le produit réutilisable en une masse fondue et à récupérer la masse fondue à partir du lit de charbon, la matière carbonée charbonneuse qui constitue le lit de charbon étant oxydée pour fournir de l'énergie pour l'operation.

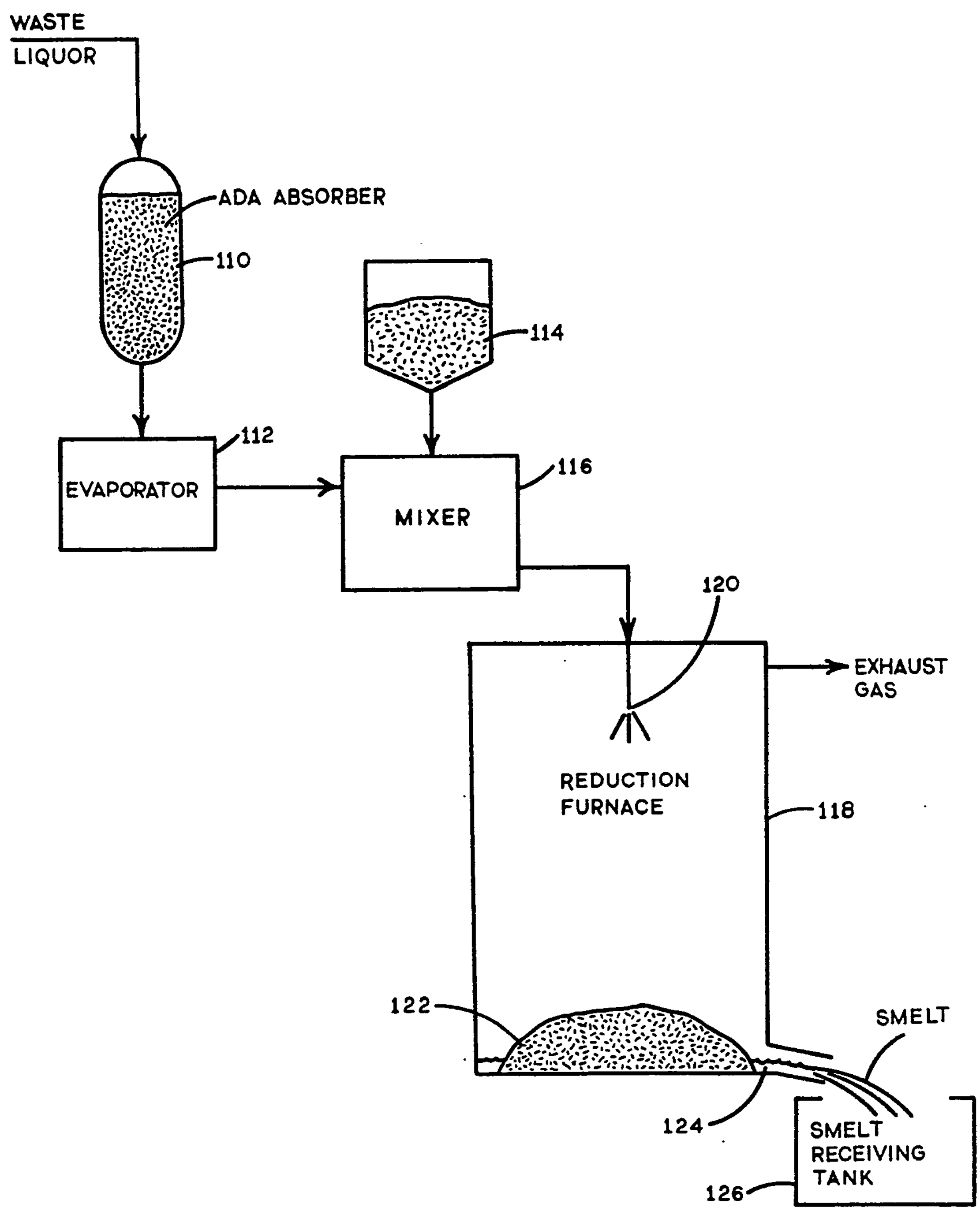
WASTE
LIQUOR
ADA ABSORBER
110
114
112
EVAPORATOR
116
MIXER
120
EXHAUST
GAS
REDUCTION
FURNACE
118
122
SMELT
124
SMELT
RECEIVING
TANK
126

FIG. 1